# FASCICULE DE BREVET EUROPEEN

(11) **EP 3 157 802 B1**
(45) Date de publication et mention de la délivrance du brevet: **10.10.2018**
(21) Numéro de dépôt: 15727699.9
(22) Date de dépôt: 12.05.2015
(51) Int. Cl.: B62D 21/00, B62D 21/15, B62D 21/16

(54) **STRUCTURE DE LA PARTIE AVANT DE LA CAISSE D'UN VÉHICULE AUTOMOBILE COMPRENANT DEUX BRANCARDS PORTANT CHACUN UN APPUI FAÇADE**
STRUKTUR DER FRONTSTRUKTUR DER KAROSSERIE EINES KRAFTFAHRZEUGS, EINSCHLIESSLICH ZWEIER SEITENSCHIENEN ZUR UNTERSTÜTZUNG VON JEWEILS EINEM EINES VORDERLAGERS
STRUCTURE OF THE FRONT PORTION OF THE BODY SHELL OF A MOTOR VEHICLE, INCLUDING TWO SIDE RAILS EACH SUPPORTING A FRONT BEARING

(30) Priorité: 20.06.2014 FR 1455680
(43) Date de publication de la demande: 26.04.2017
(73) Titulaire: PSA Automobiles SA, 78300 Poissy (FR)
(72) Inventeur: COIFFIER, Frederic, 91310 Montlhery (FR); KOPEC, Franck, 78000 Versailles (FR); TING, Andre, 92800 Puteaux (FR)
(86) Numéro de dépôt international: PCT/FR2015/051245
(87) Numéro de publication internationale: WO 2015/193567

(56) Documents cités:
- EP-A2- 1 149 756
- JP-A- 2005 262 940
- JP-A- 2008 296 738
- JP-A- 2010 083 455
- US-A- 4 563 028
- US-A- 5 100 189
- US-A- 5 727 827

## Description

La présente invention concerne une structure de la partie avant de la caisse d'un véhicule automobile comprenant deux brancards, chacun des brancards comportant une partie avant déformable en cas de choc frontal et une partie arrière plus rigide portant un appui façade qui est destiné à supporter une façade avant comportant des échangeurs thermiques du véhicule, comme par exemple un radiateur de refroidissement du moteur thermique.

L'invention concerne également un véhicule automobile comportant une telle structure.

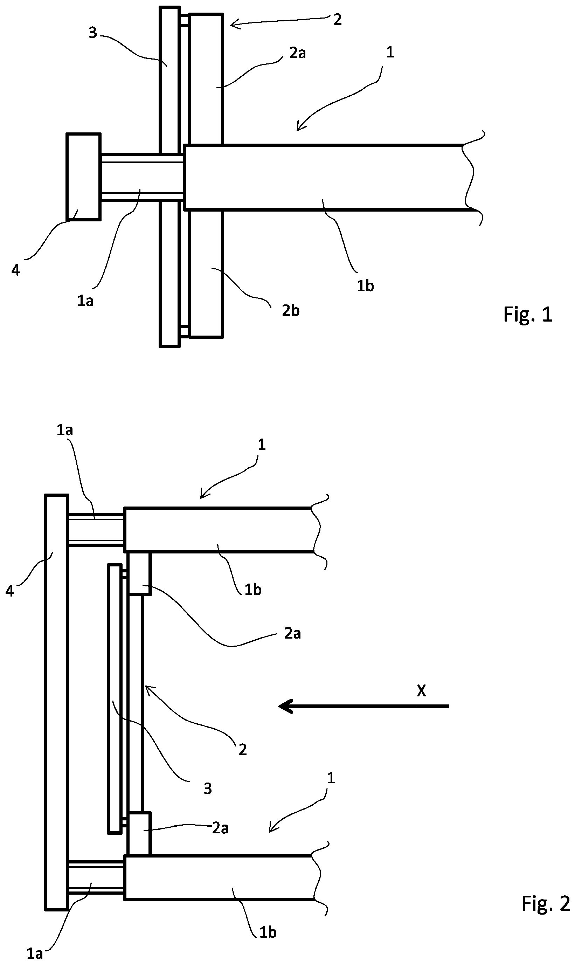

Les figures 1 et 2 représentent schématiquement une structure connue de la partie avant de la caisse d'un véhicule automobile. La figure 1 est une vue latérale et la figure 2 une vue du dessus, en se plaçant dans le référentiel du véhicule.

Cette structure comprend deux brancards 1 disposés symétriquement par rapport à l'axe longitudinal X du véhicule schématisé en figure 2. Chaque brancard comporte une partie avant 1a et une partie arrière 1b. La partie avant 1a a une fonction d'absorbeur de choc, et est généralement nommée « absorbeur de choc ». La partie avant 1a supporte une poutre de parechoc 4 à son extrémité avant, en se plaçant dans le référentiel véhicule. La partie arrière 1b comporte, à son extrémité avant sur laquelle est positionnée la partie avant 1a, un appui façade 2 destiné à maintenir une façade avant qui supporte un radiateur de refroidissement 3 du moteur thermique du véhicule. Chaque appui façade comporte une branche supérieure 2a qui s'étend au-dessus de la partie arrière 1b et une branche inférieure 2b qui s'étend sous cette partie arrière 1b, en se plaçant dans le référentiel du véhicule, sensiblement perpendiculairement à l'axe du brancard 1. Ces deux branches 2a, 2b sont sensiblement verticales.

Chacun des documents JP 2005 262940 A1 et JP2008 296 738 A1 décrit des telles structures similaires de la partie avant de la caisse d'un véhicule automobile.

La partie avant 1a a pour rôle d'absorber une partie de l'énergie du choc en cas de choc frontal en se déformant. En particulier, en cas de choc à faible vitesse, par exemple un choc à une vitesse inférieur à 16 km/h que l'on appelle classiquement « choc réparabilité », la partie avant 1a absorbe l'énergie du choc et limite ainsi les efforts transmis sur la partie arrière 1b du brancard. La partie arrière 1b du brancard reçoit donc peu d'effort et n'est pas déformée par ce type de choc.

De plus, la partie avant 1a est dimensionnée pour qu'elle soit au pire entièrement écrasée en cas de ce type de choc « choc réparabilité », sans générer de déformation sur la partie arrière 1b. Le déplacement de la poutre de parechoc 4 vers l'arrière à cause du choc est ainsi arrêté avant qu'elle n'endommage le radiateur de refroidissement 3.

Dans le cas d'un tel choc à faible vitesse, le coût de réparation du véhicule est donc limité, et le véhicule est encore apte à rouler et se propulser.

Par contre, en cas de choc à des vitesses élevées, par exemple supérieures à celle d'un « choc réparabilité », la partie avant 1a du brancard 1 ne peut plus se déformer d'avantage, et n'absorbe donc plus l'énergie du choc. Les efforts transmis à la partie arrière 1b du brancard 1 augmente jusqu'à provoquer la déformation de ladite partie arrière 1b. De plus, des efforts provenant de l'appui façade 2 peuvent venir déstabiliser la partie arrière 1b du brancard et favoriser son effondrement. Les essais et calculs effectués par la demanderesse ont permis de constater que cette position de l'appui façade était susceptible de perturber le comportement de la partie arrière 1b du brancard 1 en cas de choc frontal.

Les documents US4563028, US5100189, US5727827, EP1149756 et JP2010083455 décrivent des structures avant de véhicule.

Le but de l'invention est d'améliorer la capacité du véhicule à résister à un choc frontal. En particulier, l'invention a pour objectif de permettre d'absorber plus d'énergie lors d'un tel choc. Un autre objectif est d'éviter qu'un appui façade ne déstabilise le brancard au cours du choc.

Ce but est atteint, selon l'invention, grâce à une structure de la partie avant de la caisse d'un véhicule automobile comprenant deux brancards, chaque brancard comportant une partie avant et une partie arrière, la partie avant étant déformable en cas de choc frontal, et une partie arrière rigide portant un appui façade destiné à maintenir au moins un échangeur thermique du véhicule, tel qu'un radiateur de refroidissement du moteur thermique du véhicule, chaque appui façade comportant une branche supérieure s'étendant au-dessus de la partie avant du brancard et une branche inférieure s'étendant sous cette partie avant, caractérisé en ce que lesdites branches supérieure et inférieure de l'appui façade forment ensemble sensiblement un V ou un C ouvert vers l'avant en se plaçant dans le référentiel du véhicule, et dont le sommet situé à l'intersection desdites branches est positionné sensiblement sur l'axe du brancard et est distant de l'extrémité avant de la partie avant.

Cet appui façade en forme de V ou C permet de reculer vers l'arrière du brancard la position de fixation des deux branches de l'appui façade sur la partie arrière dudit brancard. Ainsi, l'extrémité avant de ladite partie arrière du brancard, sur laquelle est reliée la partie avant du brancard, peut elle-aussi être reculée, et la longueur de la partie avant du brancard augmentée. De ce fait, cette partie avant du brancard est capable d'absorber davantage d'énergie lors d'un choc frontal. Un autre avantage est que les efforts transmis sur la partie arrière du brancard étant diminués, la structure du véhicule située derrière la partie avant des brancards peut être allégée.

Dans un mode de réalisation préféré de l'invention, le sommet de l'appui façade est situé à l'extrémité avant de la partie arrière du brancard, en se plaçant dans le référentiel du véhicule. Ainsi, avantageusement, la partie avant du brancard prend quasiment toute la longueur entre le somment de l'appui façade et l'extrémité avant du brancard.

Dans un autre mode de réalisation de l'invention, les branches inférieure et supérieure de l'appui façade comportent des moyens de déformation programmée. Ainsi, en cas de choc avant, les efforts transmis par lesdites branches supérieure et inférieure sur la partie arrière du brancard sont sensiblement diminuées. La stabilité de ladite partie arrière du brancard est donc peu perturbée au cours du choc par les efforts transmis par l'appui façade. Les moyens de déformation programmée sont des moyens connus par l'homme du métier, comme par exemple la réduction d'épaisseur, la création d'ouverture dans une pièce, la mise en place de zone moins résistante, ou encore la mise en place de zone fusible se brisant lorsque des efforts supérieurs à une limite donnée sont appliqués. Le choix du matériau et la forme donnée aux pièces peuvent aussi suffire à obtenir la déformation programmée des branches inférieure et supérieure.

Dans un autre mode de réalisation de l'invention, l'extrémité de chacune desdites branches opposée au sommet de l'appui façade comporte des moyens pour maintenir l'échangeur thermique.

Cette disposition permet d'obtenir une distance importante entre le radiateur et la zone de fixation des branches de l'appui façade.

De préférence, les deux branches de chaque appui façade sont constituées par deux plaques métalliques en acier ou en aluminium, ou par une ou plusieurs pièces de fonderie, de préférence en fonderie d'aluminium.

De préférence également, les deux plaques métalliques sont situées sensiblement dans un plan vertical.

Selon d'autres particularités avantageuses de l'invention :
- les deux branches de chacun des appuis façade sont sensiblement symétriques par rapport à l'axe de la partie avant du brancard ;
- l'angle au sommet du V formé par les deux branches de chacun des appuis façade est compris entre 60 et 135° ;
- la partie avant des deux brancards est un corps creux en aluminium, comme par exemple un profilé en aluminium ;
- la partie avant des deux brancards est constituée par un absorbeur de choc ;
- les deux branches de chaque appui façade sont réalisées d'une seule pièce.

Selon un autre aspect, l'invention concerne également un véhicule automobile comportant une structure de la partie avant de la caisse, selon l'invention.

D'autres particularités et avantages de l'invention apparaîtront encore tout au long de la description ci-après.

Aux dessins annexés, donnés à titre d'exemples, non limitatifs :

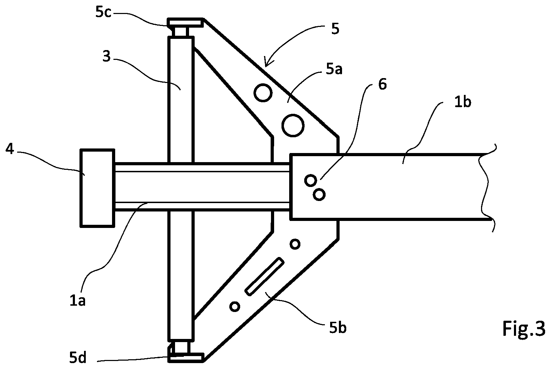

- la figure 3 est une vue latérale montrant la structure d'une partie avant de caisse selon l'invention.

La structure représentée sur la figure 3 comprend, comme dans le cas des figures 1 et 2, deux brancards 1 dont la partie avant 1a est déformable en cas de choc frontal du véhicule.

Chacun des deux brancards 1 porte un appui façade 5 destiné à maintenir le radiateur de refroidissement du moteur thermique du véhicule.

Chaque appui façade 5 comporte une branche supérieure 5a s'étendant au-dessus de la partie avant 1a du brancard 1 et une branche inférieure 5b s'étendant sous cette partie avant 1a.

Conformément à l'invention, les branches supérieure et inférieure 5a, 5b de l'appui façade 5 forment ensemble sensiblement un V ouvert vers l'avant et dont le sommet formé par l'intersection desdites branches 5a, 5b est situé sensiblement sur l'axe du brancard 1 et est distant de l'extrémité avant de cette partie avant 1a en se plaçant dans le référentiel du véhicule.

Ainsi, la zone de fixation 6 des deux branches 5a, 5b de l'appui façade 5 sur l'extrémité avant de la partie arrière 1b est beaucoup plus reculée vers l'arrière que dans le cas de l'appui façade 2, représenté sur les figures 1 et 2. La longueur de la partie avant 1a est par conséquent plus longue.

Par ailleurs, l'extrémité 5c, 5d de chacune des branches 5a, 5b opposée à la partie avant 1a du brancard 1 comporte des moyens pour maintenir le radiateur 3.

Cependant, la position de ce radiateur 3 par rapport à la poutre avant 4 est sensiblement la même que dans le cas des figures 1 et 2.

Les deux brancards 5a, 5b de chaque appui façade 5 peuvent être constituées par deux plaques métalliques en acier ou en aluminium.

Ces deux plaques peuvent être ajourées, comme montré sur la figure 3, pour réduire leur masse.

En outre, les deux plaques métalliques constituant les branches 5a, 5b peuvent être situées sensiblement dans un plan vertical.

Par ailleurs, les deux branches 5a, 5b de chacun des appuis façade 5 peuvent être sensiblement symétriques par rapport à l'axe de la partie avant 1a du brancard 1.

De plus, l'angle au sommet du V formé par les deux branches 5a, 5b de chacun des appuis façade 5 peut être compris entre 60 et 120°.

La partie avant 1a des deux brancards 1 peut être un corps creux en profilé d'aluminium, de façon que la partie avant 1a des deux brancards 1 puisse constituer un absorbeur de choc. L'aluminium a l'avantage d'avoir une bonne capacité à absorber l'énergie mécanique lorsqu'il est déformé.

En outre, les deux branches 5a, 5b de chaque appui façade 5 peuvent être réalisées d'une seule pièce, par emboutissage.

A titre de variante, les deux branches 5a, 5b de chaque appui façade peuvent, au lieu de former ensemble un V, former un C ouvert vers l'avant.

L'essentiel est que cette forme puisse permettre de reculer vers l'arrière la zone de fixation des deux branches 5a, 5b afin de libérer de reculer la position de la fixation de l'appui façade sur la partie arrière 1b du brancard 1.

On va maintenant expliquer le fonctionnement, c'est-à-dire le comportement de la structure que l'on vient de décrire, en cas de choc frontal d'un véhicule.

La forme de l'appui façade permet de reculer le point de fixation dudit appui façade sur la partie arrière 1b du brancard 1, sans changer la position du radiateur 3. La poutre de parechoc 4 restant dans la même position, la partie avant 1a du brancard 1 a une grande longueur et être reliée à la partie arrière 1b du brancard, en arrière du radiateur. La partie avant 1a peut ainsi absorber une plus grande quantité d'énergie par déformation en cas de choc avant. En cas de choc important entrainant un déplacement du radiateur 4 ou de la façade supportant le radiateur 4, les branches inférieure et supérieure 5a, 5b de l'appui façade se déforment et évitent ainsi que le mouvement de ladite façade ne génère des efforts sur la partie arrière 1b des brancards 1 qui pourraient déstabiliser ladite partie arrière 1b. La partie avant 1a peut ainsi s'écraser sur l'ensemble de sa longueur pour absorber d'avantage d'énergie et la partie arrière 1b peut mieux résister aux efforts du choc.

En cas de choc à faible vitesse, du type « choc réparabilité », les parties avant sont dimensionnées pour absorber toute l'énergie du choc avant que la poutre de parechoc 4 ne déplace ou ne détruise le radiateur 3.

L'invention pourrait également permettre de réduire le porte-à-faux avant du véhicule et donc d'obtenir un gain de masse ou d'obtenir une meilleure décélération lors du choc frontal et donc de réduire les coûts des moyens de retenue.

## Revendications

1. Structure de la partie avant de la caisse d'un véhicule automobile comprenant deux brancards (1), chaque brancard comportant une partie avant (1a) et une partie arrière (1b), la partie avant (1a) étant déformable en cas de choc frontal, et la partie arrière (1b) étant rigide et portant un appui façade (5) destiné à maintenir au moins un échangeur thermique (3) du véhicule, tel qu'un radiateur (3) de refroidissement du moteur thermique du véhicule, chaque appui façade comportant une branche supérieure (5a) s'étendant au-dessus de la partie avant (1a) du brancard (1) et une branche inférieure (5b) s'étendant sous cette partie avant (1a), **caractérisé en ce que** lesdites branches supérieure et inférieure (5a, 5b) de l'appui façade (5) forment ensemble sensiblement un V ou un C ouvert vers l'avant en se plaçant dans le référentiel du véhicule, et dont le sommet situé à l'intersection desdites branches (5a, 5b) est positionné sensiblement sur l'axe du brancard (1) et est distant de l'extrémité avant de la partie avant (1a).

2. Structure selon la revendication 1 **caractérisée en ce que** le sommet de l'appui façade est situé à l'extrémité avant de la partie arrière (1b) du brancard (1), en se plaçant dans le référentiel du véhicule.

3. Structure selon l'une des revendications 1 ou 2 **caractérisée en ce que** les branches inférieure et supérieure (5a, 5b) de l'appui façade comportent des moyens de déformation programmée.

4. Structure selon l'une des revendications 1 ou 3, **caractérisée en ce que** les deux branches (5a, 5b) de chaque appui façade (5) sont constituées au moins par deux plaques métalliques ou par une ou plusieurs pièce de fonderie.

5. Structure selon l'une des revendications 1 à 4, **caractérisée en ce que** les deux branches (5a, 5b) de chacun des appuis façade (5) sont sensiblement symétriques par rapport à l'axe de la partie avant (1a) du brancard (1).

6. Structure selon la revendication 5, **caractérisée en ce que** l'angle au sommet du V formé par les deux branches (5a, 5b) de chacun des appuis façade (5) est compris entre 60 et 135°.

7. Structure selon l'une des revendications 1 à 6, **caractérisée en ce que** la partie avant (1a) des deux brancards (1) est un corps creux en aluminium.

8. Structure selon l'une des revendications 1 à 7, **caractérisée en ce que** la partie avant (1a) des deux brancards (1) est constituée par un absorbeur de choc.

9. Structure selon l'une des revendications 1 à 8, **caractérisée en ce que** les deux branches (5a, 5b) de chaque appui façade (5) sont réalisées d'une seule pièce.

10. Véhicule automobile comportant une structure de la partie avant de caisse selon l'une des revendications 1 à 9.

## Patentansprüche

1. Struktur der Frontstruktur der Karosserie eines Kraftfahrzeugs, einschließlich zweier Seitenschienen (1), wobei jede Seitenschiene einen Vorderteil (1a) und einen Hinterteil (1b) umfasst, wobei der Vorderteil (1a) bei einem Frontalaufprall verformbar ist und der Hinterteil (1b) starr ist und ein Vorderlager (5) trägt, das dazu bestimmt ist, mindestens einen Wärmeaustauscher (3) des Fahrzeugs, wie einen Kühler (3) zum Kühlen der Brennkraftmaschine des Fahrzeugs, zu halten, wobei jedes Vorderlager einen oberen Schenkel (5a) umfasst, der sich oberhalb des Vorderteils (1a) der Seitenschiene (1) erstreckt, und einen unteren Schenkel (5b), der sich unter diesem Vorderteil (1a) erstreckt, **dadurch gekennzeichnet, dass** der obere Schenkel und der untere Schenkel (5a, 5b) des Vorderlagers (5) gemeinsam im Wesentlichen ein V oder ein C, das nach vorn offen ist, bilden, wenn man sich in das Bezugssystem des Fahrzeugs platziert, und dessen Scheitel, der an der Schnittstelle der Schenkel (5a, 5b) liegt, im Wesentlichen auf der Achse der Seitenschiene (1) positioniert und von dem Vorderende des Vorderteils (1a) entfernt ist.

2. Struktur nach Anspruch 1, **dadurch gekennzeichnet, dass** der Scheitel des Vorderlagers an dem vorderen Ende des Hinterteils (1b) der Seitenschiene (1) liegt, wenn man sich in dem Bezugssystem des Fahrzeugs platziert.

3. Struktur nach einem der Ansprüche 1 oder 2, **dadurch gekennzeichnet, dass** der untere und der obere Schenkel (5a, 5b) des Vorderlagers Mittel mit programmierter Verformung umfassen.

4. Struktur nach einem der Ansprüche 1 oder 3, **dadurch gekennzeichnet, dass** die zwei Schenkel (5a, 5b) jedes Vorderlagers (5) aus mindestens zwei Metallplatten oder aus einem oder mehreren Gussteilen bestehen.

5. Struktur nach einem der Ansprüche 1 bis 4, **dadurch gekennzeichnet, dass** die zwei Schenkel (5a, 5b) jedes der Vorderlager (5) im Wesentlichen in Bezug zu der Achse des Vorderteils (1a) der Seitenschiene (1) symmetrisch sind.

6. Struktur nach Anspruch 5, **dadurch gekennzeichnet, dass** der Winkel am Scheitel des V, das von den zwei Schenkeln (5a, 5b) jedes der Vorderlager (5) gebildet wird, zwischen 60 und 135° liegt.

7. Struktur nach einem der Ansprüche 1 bis 6, **dadurch gekennzeichnet, dass** der Vorderteil (1a) der zwei Schenkel (1) ein Hohlkörper aus Aluminium ist.

8. Struktur nach einem der Ansprüche 1 bis 7, **dadurch gekennzeichnet, dass** der Vorderteil (1a) der zwei Seitenschienen (1) aus einem Stoßfänger besteht.

9. Struktur nach einem der Ansprüche 1 bis 8, **dadurch gekennzeichnet, dass** die zwei Schenkel (5a, 5b) jedes Vorderlagers (5) aus einem einzigen Teil gebildet sind.

10. Kraftfahrzeug, das eine Struktur der Frontstruktur der Karosserie nach einem der Ansprüche 1 bis 9 umfasst.

## Claims

1. A structure of the front portion of the body shell of a motor vehicle including two side rails (1), each side rail comprising a front portion (1a) and a rear portion (1b), the front portion (1a) being deformable in the event of frontal impact, and the rear portion (1b) being rigid and supporting a front bearing (5) for supporting at least one heat exchanger (3) of the vehicle, such as a cooling radiator (3) of the heat engine of the vehicle, each front bearing comprising an upper arm (5a) extending above the front portion (1a) of the side rail (1), and a lower arm (5b) extending beneath this front portion (la), **characterized in that** said upper and lower arms (5a, 5b) of the front bearing (5) together form substantially a V or a C open toward the front by being placed in the frame of reference of the vehicle, and in which the apex located at the intersection of said arms (5a, 5b) is positioned substantially on the axis of the side rail (1) and is spaced apart from the front end of the front portion (1a).

2. The structure according to Claim 1, **characterized in that** the apex of the front bearing is situated at the front end of the rear portion (1b) of the side rail (1), by being placed in the frame of reference of the vehicle.

3. The structure according to one of Claims 1 or 2, **characterized in that** the lower and upper arms (5a, 5b) of the front bearing comprise means for programmed deformation.

4. The structure according to one of Claims 1 or 3, **characterized in that** the two arms (5a, 5b) of each front bearing (5) are constituted at least by two metal plates or by one or more castings.

5. The structure according to one of Claims 1 to 4, **characterized in that** the two arms (5a, 5b) of each of the front bearings (5) are substantially symmetrical with respect to the axis of the front portion (1a) of the side rail (1).

6. The structure according to Claim 5, **characterized in that** the angle at the apex of the V formed by the two arms (5a, 5b) of each of the front bearings (5) is comprised between 60 and 135°.

7. The structure according to one of Claims 1 to 6, **characterized in that** the front portion (1a) of the two side rails (1) is a hollow body made of aluminium.

8. The structure according to one of Claims 1 to 7, **characterized in that** the front portion (1a) of the two side rails (1) is constituted by a shock absorber.

9. The structure according to one of Claims 1 to 8, **characterized in that** the two arms (5a, 5b) of each front bearing (5) are made in a single piece.

10. A motor vehicle comprising a structure of the front portion of a body shell according to one of Claims 1 to 9.
